# EUROPEAN PATENT APPLICATION

(11) **EP 4 763 323 A1**
(43) Date of publication of application: **24.06.2026**
(21) Application number: 25208404.1
(22) Date of filing: 13.10.2025
(51) Int. Cl.: B01F 35/90

(54) **REFRIGERANT SUPPLY APPARATUS**

(30) Priority: 17.12.2024 KR 20240188797
(71) Applicant: SAMSUNG SDI CO., LTD., Yongin-si, Gyeonggi-do 17084 (KR)
(72) Inventor: KIM, Jongseon, 17084 Yongin-si (KR); KIM, Seonguk, 17084 Yongin-si (KR); LEE, Hoogil, 17084 Yongin-si (KR); PYO, Younghak, 17084 Yongin-si (KR); SEO, Wonsub, 17084 Yongin-Si (KR)
(74) Representative: Marks & Clerk LLP

(57) **Abstract**

A refrigerant supply apparatus (10) includes a refrigerant storage (100) supplying a refrigerant (R) to a slurry mixer (SM) through a supply line (SL), and a recovery tank (200) recovering the refrigerant from the slurry mixer through a recovery line (RCL), the recovery tank recovering the refrigerant stored therein to the refrigerant storage through a return line (RTL).

## Description

### BACKGROUND

### 1. Field

The present disclosure relates to a refrigerant supply apparatus.

### 2. Description of the Related Art

A secondary battery may be charged and discharged unlike a primary battery that may not be recharged, and as techniques and demands for mobile devices are increasing, demand for batteries as energy sources is also being rapidly increased.

The above information disclosed in this background section is only for enhancement of understanding of the background of the disclosure and therefore it may contain information that does not form the related art that is already known to a person of ordinary skill in the art.

### SUMMARY

The present disclosure provides a refrigerant supply apparatus which supplies a sufficient amount of refrigerant to a slurry mixer by using a recovery tank arranged between the slurry mixer and a refrigerant storage, and maintains an amount of refrigerant stored in the recovery tank and a supply tank within a certain range.

However, the technical purpose to be solved by the present disclosure is not limited to the above, and other objects not mentioned herein will be clearly understood by those skilled in the art from the following disclosure.

Embodiments include a refrigerant supply apparatus and method, including a refrigerant storage supplying a refrigerant to a slurry mixer through a supply line, and a recovery tank recovering the refrigerant from the slurry mixer through a recovery line, the recovery tank recovering the refrigerant stored therein to the refrigerant storage through a return line.

The recovery tank may have an opening through which an inner space and an outer space thereof are in fluidic communication with each other.

The opening may be closer to an upper surface of the recovery tank than to a lower surface of the recovery tank.

A recovery height value of a point where the recovery line is connected to the recovery tank may be greater than a return height of a point where the return line is connected to the recovery tank.

A point where the recovery line is connected to the recovery tank may be closer to an upper surface of the recovery tank than to a lower surface of the recovery tank.

The refrigerant supply apparatus and method may further include a return pump on the return line, the return pump returning a recovery refrigerant stored in the recovery tank to the refrigerant storage.

The refrigerant supply apparatus and method may further include a controller electrically connected to the return pump, the controller being configured to control driving of the return pump according to a water level value of the recovery refrigerant.

The refrigerant supply apparatus and method may further include a supply tank on the supply line, the supply tank storing the refrigerant supplied from the refrigerant storage.

The refrigerant supply apparatus and method may further include a supply pump between the slurry mixer and the supply tank, the supply pump supplying refrigerant stored in the supply tank to the slurry mixer.

The refrigerant supply apparatus and method may further include a valve portion between the refrigerant storage and the supply tank, the valve portion controlling a flow of the refrigerant supplied from the refrigerant storage to the supply tank.

The refrigerant supply apparatus and method may further include a controller electrically connected to the valve portion, the controller being configured to control driving of the valve portion according to a water level value of the refrigerant stored in the supply tank.

Embodiments include a refrigerant supply apparatus and method, including a refrigerant storage supplying a refrigerant to a slurry mixer through a supply line and a bypass line, a supply tank on the supply line, the supply tank storing the refrigerant supplied from the refrigerant storage, a valve portion controlling a flow of the refrigerant to the supply line and the bypass line, and a recovery tank recovering the refrigerant from the slurry mixer through a recovery line, the recovery tank returning refrigerant stored therein to the refrigerant storage through a return line.

The refrigerant supply apparatus and method may further include a controller electrically connected to the valve portion, the controller being configured to control driving of the valve portion according to a water level value of a supply refrigerant stored in the supply tank.

The recovery tank may have an opening through which an inner space and an outer space are in communication with each other.

The opening may be closer to an upper surface of the recovery tank than to a lower surface of the recovery tank.

A point where the recovery line is connected to the recovery tank may be closer to an upper surface of the recovery tank than to a lower surface of the recovery tank.

A point where the return line is connected to the recovery tank may be closer to a lower surface of the recovery tank than to an upper surface of the recovery tank.

The refrigerant supply apparatus and method may further include a return pump on the return line, the return pump returning the refrigerant stored in the recovery tank to the refrigerant storage.

The return pump may operate according to a water level value of the refrigerant in the recovery tank.

The refrigerant supply apparatus and method may further include a controller electrically connected to the valve portion, the controller being configured to drive the valve portion according to a water level value of a supply refrigerant stored in the supply tank.

At least some of the above and other features of the invention are set out in the claims.

### BRIEF DESCRIPTION OF THE DRAWINGS

Features will become apparent to those of ordinary skill in the art by describing embodiments in detail with reference to the attached drawings, in which:
FIG. 1 is a diagram of a refrigerant supply apparatus according to an embodiment of the present disclosure;
FIG. 2 is a diagram of a refrigerant supply apparatus according to another embodiment of the present disclosure;
FIG. 3 is a diagram of a refrigerant supply apparatus according to another embodiment of the present disclosure;
FIG. 4 is a block diagram of a refrigerant supply apparatus according to an embodiment of the present disclosure;
FIG. 5 is a diagram showing a recovery tank of FIG. 1 in detail;
FIG. 6 is a diagram showing the recovery tank of FIG. 5 in detail in another aspect; and
FIG. 7 is a diagram showing a supply tank of FIG. 3 in detail.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, it will be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

The term 'equal' refers to 'substantially equal'. Accordingly, substantially equal may include the deviation regarded as a low level in the corresponding technical field, for example, the deviation of 5% or less. In addition, a uniform parameter in a predetermined area may refer to uniform from the average point of view.

Expressions including ordinal numbers such as "first" and "second" indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it may be positioned in contact with an upper surface (or a lower surface) of the other element, but another element may be positioned between the element and the other element on (or below) the element.

It will be further understood that when an element is referred to as being "connected", "coupled" or "joined" to another element, the elements may be directly connected or joined to each other, but intervening elements may be present between them or each element may be "connected", "coupled" or "joined" to each other through another element. It will be understood that when an element is referred to as being "electrically coupled" to another element, the element can be directly electrically coupled to another element or intervening elements may be present.

Throughout the specification, the terms "A and/or B" imply A, B, or A and B, unless otherwise defined. That is, the term "and/or" includes all or various combinations of a plurality of items that are related and arranged. The terms "C to D" imply C or more and D or less, unless otherwise described.

The terminology used herein is for the purpose of describing embodiments of the present disclosure and is not intended to be limiting of the present disclosure.

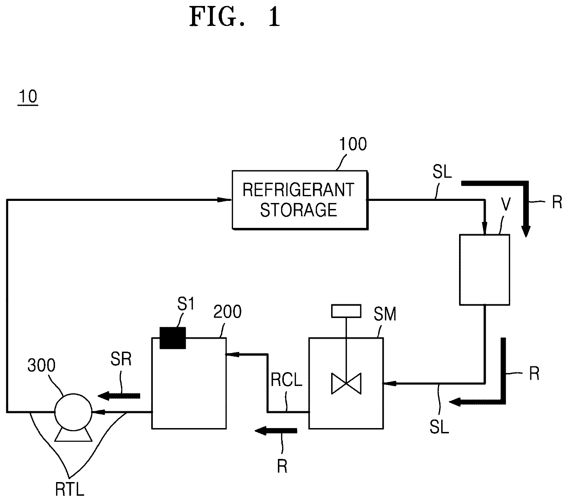

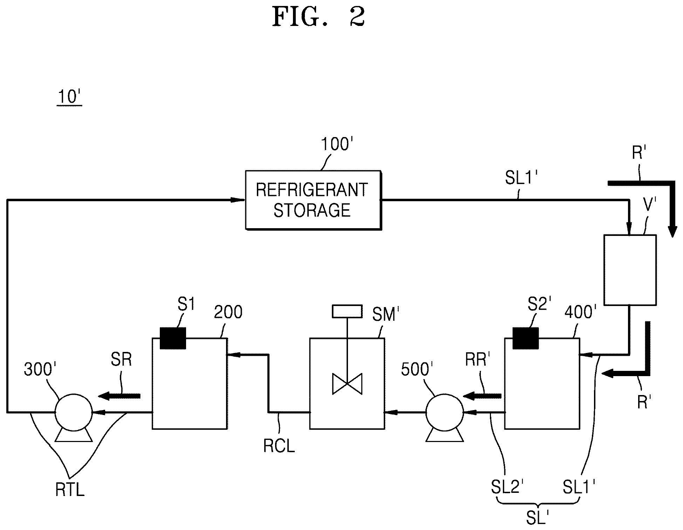

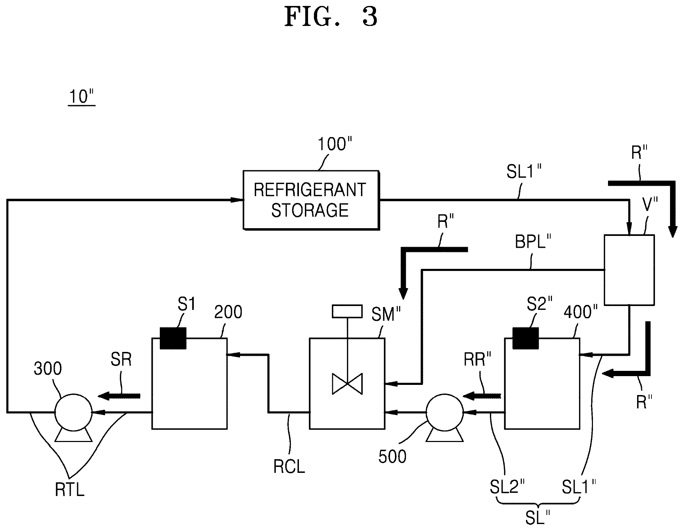

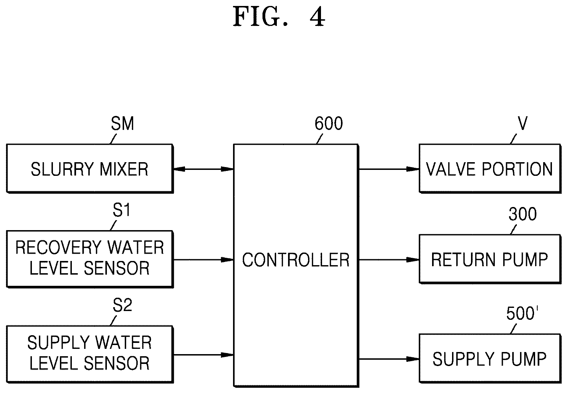

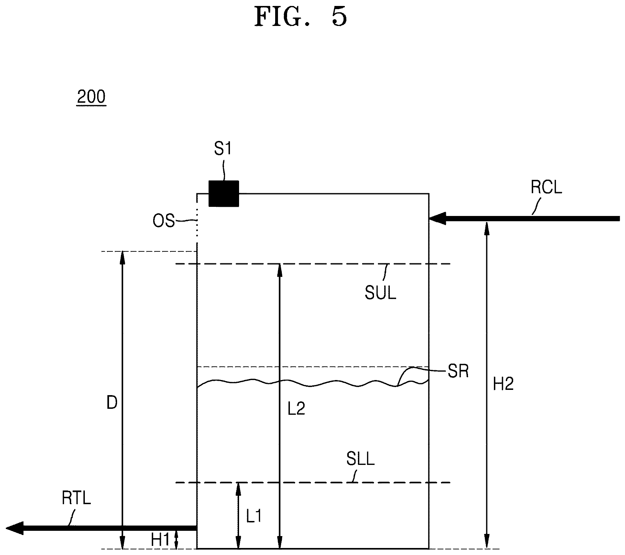

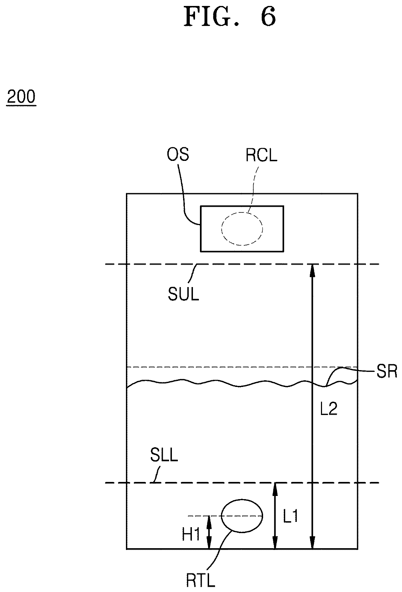

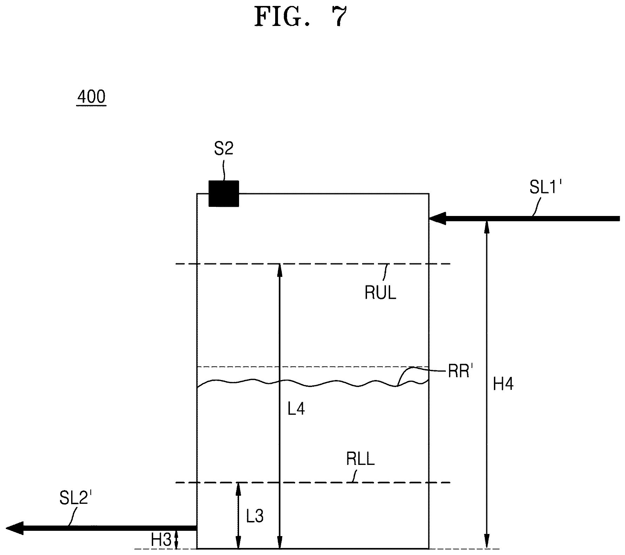

FIG. 1 is a diagram of a refrigerant supply apparatus according to an embodiment of the present disclosure. FIG. 2 is a diagram of a refrigerant supply apparatus according to another embodiment of the present disclosure. FIG. 3 is a diagram of a refrigerant supply apparatus according to another embodiment of the present disclosure. FIG. 4 is a block diagram of a refrigerant supply apparatus according to an embodiment of the present disclosure. FIG. 5 is a diagram showing a recovery tank of FIG. 1 in detail. FIG. 6 is a diagram showing the recovery tank of FIG. 5 in detail in another aspect. FIG. 7 is a diagram showing a supply tank of FIG. 3 in detail.

Referring to FIG. 1, a refrigerant supply apparatus 10 according to an embodiment of the present disclosure is to supply a refrigerant to a slurry mixer SM, and may include a refrigerant storage 100, a recovery tank 200, and a return pump 300.

Referring to FIG. 1, the slurry mixer SM may agitate the slurry. The slurry mixer SM may mix respective materials included in the slurry by agitating the slurry. The slurry mixer SM may evenly distribute particles and adjust viscosity by agitating the slurry therein.

For example, the slurry mixer SM may manufacture an active material applied on an electrode. That is, the slurry mixer SM may manufacture the active material by agitating a binder, a conductive material, a solvent, etc. Although a purpose of the slurry mixer SM may vary from the above example, but hereinafter, an embodiment in which the slurry mixer SM produces the active material applied on the electrode of a battery is described below for convenience of description.

The slurry mixer SM may receive a supply of a refrigerant R and supply heat generated during the agitation of the slurry to the refrigerant R. The slurry mixer SM may have a space in which heat exchange between the slurry and the refrigerant R occurs so as to enable the heat exchange between the agitated slurry and the refrigerant R.

The slurry mixer SM may cool down the slurry by generating the heat exchange between the refrigerant R and the slurry. Thus, a temperature value of the refrigerant R discharged from the slurry mixer SM may be greater than a temperature value of the refrigerant R entering the slurry mixer SM.

Hereinafter, 'recovery refrigerant' may be defined as a refrigerant stored in a recovery tank and flowing through a return line.

Referring to FIG. 1, the refrigerant storage 100 may store the refrigerant R supplied to the slurry mixer SM. The refrigerant storage 100 may have a space in which the refrigerant R may be stored and thus may store the refrigerant R to be supplied to the slurry mixer SM.

The refrigerant storage 100 may be a tank capable of storing the refrigerant R and may be a facility including the refrigerant storage tank. The refrigerant storage 100 may be an infrastructure that may supply the refrigerant R stored in a supply line SL to various devices. For example, the refrigerant storage 100 may be a water supply facility that may supply the refrigerant R to the slurry mixer.

The refrigerant storage 100 may supply the refrigerant R to the slurry mixer SM. The refrigerant storage 100 is fluidically connected to the slurry mixer SM via the supply line SL and may transfer the refrigerant R stored therein to the slurry mixer SM.

The refrigerant storage 100 includes a pump and may supply the refrigerant R to the slurry mixer SM. The refrigerant storage 100 may transfer fluidic energy to the refrigerant R by using the pump provided therein to transfer the refrigerant R to the slurry mixer SM.

The refrigerant storage 100 may receive a recovery refrigerant SR transferred from the recovery tank 200. The refrigerant storage 100 may receive the recovery refrigerant SR stored in the recovery tank 200 from the recovery tank 200. The refrigerant storage 100 may receive the recovery refrigerant SR transferred from the recovery tank 200 via the return line RTL.

The refrigerant storage 100 may store the recovery refrigerant SR transferred from the recovery tank 200 and transfer the recovery refrigerant SR to another component. In other embodiments, the refrigerant storage 100 may cool down the recovery refrigerant SR and then transfer the recovery refrigerant SR to the slurry mixer SM again.

Referring to FIGS. 1, 5, and 6, the recovery tank 200 may recover the refrigerant R discharged from the slurry mixer SM. The recovery tank 200 may be fluidically connected to the slurry mixer SM via a recovery line RCL and may receive the refrigerant R discharged from the slurry mixer SM.

The recovery tank 200 may store the recovered refrigerant R. The recovery tank 200 may have an inner space in which the refrigerant R may be stored. The recovery tank 200 has a hollow cavity and may provide a passage through which the refrigerant transferred from the slurry mixer SM may enter the recovery tank 200 without being interfered by another component or back pressure.

That is, the recovery tank 200 may secure a pressure difference between one end of the recovery line RCL connected to the slurry mixer SM and the other end of the recovery line RCL connected to the recovery tank 200. Therefore, a flow rate of the refrigerant R transferred from the slurry mixer SM to the recovery tank 200 may increase.

When the flow rate of the refrigerant R transferred from the slurry mixer SM to the recovery tank 200 increases, the flow rate of the refrigerant R that may enter the slurry mixer SM from the refrigerant storage 100 may also increase. That is, the amount of refrigerant R entering the slurry mixer SM and exchanging heat with the slurry may increase. Thus, the slurry cooling efficiency of the slurry mixer SM may be improved.

The recovery tank 200 may transfer the recovery refrigerant SR stored therein to the refrigerant storage 100. The recovery tank 200 may be fluidically connected to the refrigerant storage 100 via the return line RTL and may allow the recovery refrigerant SR to return to the refrigerant storage 100. When the recovery tank 200 transfers the recovery refrigerant SR to the refrigerant storage 100, the amount of the recovery refrigerant SR stored in the recovery tank 200 may be maintained to a certain amount or less. Thus, the structural stability of the recovery tank 200 may be improved and the refrigerant R may be sufficiently recovered from the slurry mixer SM.

Referring to FIGS. 5 and 6, the recovery tank 200 may have an opening OS through which an inner space and an outer space are fluidically in communication with each other. The opening OS is formed in one side of the recovery tank 200, and thus, a passage through which air may flow between the inside and outside of the recovery tank 200 may be formed. Thus, an internal pressure of the recovery tank 200 may be substantially the same as the atmospheric pressure out of the recovery tank 200.

In other words, the opening OS may form the inner pressure of the recovery tank 200 to be substantially equal to the atmospheric pressure. When the inner pressure of the recovery tank 200 is maintained at the atmospheric pressure level, a pressure difference between one end of the recovery line RCL connected to the slurry mixer SM and the other end of the recovery line RCL connected to the recovery tank 200 may increase. Therefore, a flow rate of the refrigerant R transferred from the slurry mixer SM to the recovery tank 200 may further increase.

Hereinafter, being adjacent to a certain object is defined to include being located overlapping a space occupied by the object, as well as the space adjacent to the object.

Hereinafter, 'lower surface' is defined as one surface, from among a plurality of surfaces forming a certain element, arranged in a direction in which the refrigerant flows naturally, and an 'upper surface' is defined as an opposite surface arranged in a direction opposite to the lower surface.

Hereinafter, 'upper portion' is defined as a space that is relatively closer to an upper surface than to a lower surface in a certain element, and 'lower portion' is defined as a space relatively closer to the lower surface than to the upper surface in a certain element.

The opening OS may be arranged adjacent to the upper surface of the recovery tank 200. For example, the opening OS may be arranged to be closer to the upper surface than to the lower surface of the recovery tank 200. The opening OS may be arranged to be adjacent to the upper surface of the recovery tank 200 and may improve a capacity of the recovery tank 200 for accommodating the recovery refrigerant SR. That is, the amount of recovery refrigerant SR that may be stored in the recovery tank 200 may increase.

FIGS. 5 and 6 show that the opening OS is formed in the side surface of the recovery tank 200, but the position of forming the opening OS in the upper surface of the recovery tank 200 may be formed throughout the upper and side surfaces.

In an embodiment, the opening OS may be located above a recovery upper limit SUL that is a criterion for operating the return pump 300 that is described later. That is, an opening height value D of the point where the opening OS is formed may be greater than a height value L2 of the recovery upper limit SUL.

In other words, the opening OS may be formed at a point higher than a water level value of the recovery refrigerant SR where the return pump 300 starts to operate. The return pump 300 operates before the recovery refrigerant SR reaches the opening OS, and may transfer the recovery refrigerant SR in the recovery tank 200 to the refrigerant storage 100. Thus, the recovery refrigerant SR may be stably accommodated in the recovery tank 200.

Referring to FIGS. 1, 5, and 6, the recovery tank 200 may receive the refrigerant R from the recovery line RCL and store the refrigerant as the recovery refrigerant SR. Also, the recovery tank 200 may discharge the stored recovery refrigerant SR through the return line RTL.

The recovery line RCL may be connected to the recovery tank 200 at a point adjacent to the upper surface of the recovery tank 200. The recovery line RCL may be connected to the recovery tank 200 at a point closer to the upper surface of the recovery tank 200, than to the lower surface. That is, the recovery line RCL may be arranged to be spaced apart from the lower surface where the recovery refrigerant SR starts to fill. Thus, the recovery line RCL may not contact the recovery refrigerant SR in the recovery tank 200.

In an embodiment, a recovery height value H2 of the point where the recovery line RCL is connected to the recovery tank 200 may be greater than the height value L2 of the recovery upper limit SUL. That is, the recovery line RCL may be located above the recovery upper limit SUL that is the criterion for operating the return pump 300. The return pump 300 may operate before the recovery refrigerant SR reaches the recovery line RCL, and then, may transfer the recovery refrigerant SR in the recovery tank 200 to the refrigerant storage 100. Thus, the refrigerant R discharged from the slurry mixer SM may be sufficiently transferred to the recovery tank 200 via the recovery line RCL.

The return line RTL may be connected to the recovery tank 200 at a point adjacent to the lower surface of the recovery tank 200. The return line RTL may be connected to the recovery tank 200 at a point closer to the lower surface than the upper surface of the recovery tank 200.

The return line RTL may be arranged adjacent to the lower surface where the recovery refrigerant SR starts to fill and may come into contact with the recovery refrigerant SR. Then, when the refrigerant R is injected into the recovery tank 200, the return line RTL comes into contact with the recovery refrigerant SR and the recovery refrigerant SR may enter the inside of the return line RTL.

When the refrigerant R is injected into the recovery tank 200, the return line RTL may be connected to the recovery tank 200 at a point lower than the water level of the recovery refrigerant SR. That is, the recovery refrigerant SR in the return line RTL may receive a pressure from the recovery refrigerant SR stored in the recovery tank 200. thus, flow energy of the recovery refrigerant SR transferred to the refrigerant storage 100 from the recovery tank 200 via the return line RTL may increase.

In an embodiment, a return height value H1 at a point where the return line RTL is connected to the recovery tank 200 may be less than a height value L1 of a recovery lower limit SLL. That is, the return line RTL may be located under the recovery lower limit SLL that is a criterion for operating the return pump 300.

That is, the return pump 300 may stop operating before the recovery refrigerant SR reaches the return line RTL, and stop discharging the recovery refrigerant SR. In other words, the point where the return line RTL is connected to the recovery tank 200 may be lower than the water level value of the recovery refrigerant SR. Because the recovery refrigerant SR fills in the return line RTL, an idling of the return pump 300 installed on the return line RTL may be prevented.

In an embodiment, the recovery line RCL may be connected to the recovery tank 200 at a point higher than the return line RTL. The recovery height value H2 of the point where the recovery line RCL is connected to the recovery tank 200 may be greater than the return height value H1 of the point where the return line RTL is connected to the recovery tank 200.

Because the recovery height value H2 is greater than the return height value H1, the pressure applied to the refrigerant R in the recovery line RCL from the inside of the recovery tank 200 may be less than the pressure applied to the recovery refrigerant SR in the return line RTL from the inside of the recovery tank 200.

That is, the pressure applied to the refrigerant R entering the recovery tank 200 from the inside of the recovery tank 200 may be less than the pressure applied to the recovery refrigerant SR discharged from the recovery tank 200. Therefore, the refrigerant R may sufficiently enter the recovery tank 200, and the recovery refrigerant SR may be sufficiently transferred to the refrigerant storage 100.

Referring to FIG. 1, the return pump 300 may be arranged on the return line RTL. The return pump 300 is arranged on the return line RTL so as to transfer the flow energy to the recovery refrigerant SR in the return line RTL. The return pump 300 may form (e.g., enable) flow of the recovery refrigerant SR in the return line RTL.

Referring to FIG. 1, the return pump 300 may return the recovery refrigerant stored in the recovery tank to the refrigerant storage. The return pump 300 may form a flow so that the recovery refrigerant SR in the return line RTL may be transferred to the refrigerant storage 100 from the recovery tank 200.

The return pump 300 may operate according to a water level value of the recovery refrigerant SR. The return pump 300 may start to operate when the water level value of the recovery refrigerant SR in the recovery tank 200 is large, and may stop operating when the water level value of the recovery refrigerant SR is less.

In an embodiment, the return pump 300 may start to operate when the water level value of the recovery refrigerant SR is greater than or equal to the recovery upper limit SUL. The return pump 300 may reduce the amount of the recovery refrigerant SR stored in the recovery tank 200 by transferring the recovery refrigerant SR stored in the recovery tank 200 to the refrigerant storage 100.

In another embodiment, the return pump 300 may stop operating when the water level value of the recovery refrigerant SR is less than or equal to the recovery lower limit SLL. The return pump 300 may increase the amount of the recovery refrigerant SR accommodated in the recovery tank 200 by allowing the recovery refrigerant SR stored in the recovery tank 200 to be accommodated in the recovery tank 200.

Thus, the return pump 300 may maintain the amount of the recovery refrigerant SR stored in the recovery tank 200 within a certain range.

Referring to FIG. 1, a valve portion V may be arranged between the refrigerant storage 100 and the slurry mixer SM. The valve portion V may be arranged on the supply line SL that fluidically connects the refrigerant storage 100 to the slurry mixer SM. The valve portion V may be arranged on the supply line SL to open and close the supply line SL.

The valve portion V may adjust the flow of the refrigerant R transferred from the refrigerant storage 100 to the slurry mixer SM. For example, the valve portion V may adjust the flow of the refrigerant R flowing in the supply line SL according to the operation of the slurry mixer SM.

When the slurry mixer SM is operated, the valve portion V opens the supply line SL so that the refrigerant R may be transferred into the slurry mixer SM. When the slurry mixer SM does not operate, the valve portion V may close the supply line SL so as to stop the supply of the refrigerant R to the slurry mixer SM. Thus, the efficiency of supplying the refrigerant R may be improved.

Referring to FIG. 1, a recovery water level sensor S1 may measure a water level value of the recovery refrigerant SR stored in the recovery tank 200. The recovery water level sensor S1 may measure the water level value of the recovery refrigerant SR and transfer the measured value to a controller 600. Thus, the recovery water level sensor S1 may transfer to the controller 600 information that becomes a determination criterion for controlling the driving of the return pump 300.

A refrigerant supply apparatus 10' (see FIG. 2) according to another embodiment of the present disclosure differs from the refrigerant supply apparatus 10 according to the above embodiment in view of further including some components, and thus, differences are described below.

Hereinafter, 'supplied refrigerant' is defined as a refrigerant that is stored in the supply tank (i.e., supply tank 400') and flows through a second supply line.

Referring to FIG. 2, the refrigerant supply apparatus 10' according to another embodiment of the present disclosure may further include a supply tank 400' and a supply pump 500'. The refrigerant supply apparatus 10' according to another embodiment of the present disclosure may further include the supply tank 400' and the supply pump 500', and thus, a hydraulic pressure of a supply refrigerant RR' transferred to a slurry mixer SM' may be effectively adjusted.

Referring to FIG. 2, the supply tank 400' may be arranged on a supply line SL'. The supply tank 400' may be arranged between a refrigerant storage 100' and the slurry mixer SM'. The supply tank 400' may provide a space in which the refrigerant R' supplied from the refrigerant storage 100' may be stored. That is, the supply tank 400' may store the refrigerant R' transferred from the refrigerant storage 100' and may transfer the stored refrigerant R' to the slurry mixer SM'.

The supply tank 400' may secure a flow rate of the refrigerant R' transferred to the slurry mixer SM'. The supply tank 400' may store the refrigerant R' transferred from the refrigerant storage 100' so as to secure the flow rate that may be transferred to the slurry mixer SM'.

Referring to FIGS. 2 and 7, the supply tank 400' may store the refrigerant R' transferred from the refrigerant storage 100'. The supply tank 400' receives the refrigerant R' from the refrigerant storage 100' through a first supply line SL1', and may supply the refrigerant R' to the slurry mixer SM' through a second supply line SL2'.

The first supply line SL1' may be connected to the supply tank 400' at a point adjacent to the upper surface of the supply tank 400'. The first supply line SL1' may be connected to the supply tank 400' at a point adjacent to the upper surface than the lower surface of the supply tank 400'. That is, the first supply line SL1' may be spaced apart from the lower surface where the supply refrigerant RR' starts to fill. Thus, the supply line SL' may not come into contact with the supply refrigerant RR' in the supply tank 400'.

In an embodiment, a first supply height H4 of a point where the first supply line SL1' is connected to the supply tank 400' may have a greater value than a height L4 of the supply upper limit RUL. That is, the first supply line SL1' may be located above the supply upper limit RUL that is the criterion for operating the supply pump 500'. The supply pump 500' may operate before the supply refrigerant RR' reaches the first supply line SL1' and transfer the supply refrigerant RR' in the supply tank 400' to the slurry mixer SM'. Thus, a water level value of the supply refrigerant RR' may be maintained within a constant range.

The second supply line SL2' may be connected to the supply tank 400' at a point adjacent to the lower surface of the supply tank 400'. The second supply line SL2' may be connected to the supply tank 400' at a point adjacent to the lower surface than the upper surface of the supply tank 400'.

The second supply line SL2' may be arranged adjacent to the lower surface where the supply refrigerant RR' starts to fill and may come into contact with the supply refrigerant RR'. Again, when the refrigerant R' is injected into the supply tank 400', the second supply line SL2' may come into contact with the supply refrigerant RR' so that the supply refrigerant RR' may enter the second supply line SL2'.

When the refrigerant R' is injected into the supply tank 400', the second supply line SL2' may be connected to the supply tank 400' at a point lower than the water level of the supply refrigerant RR'. That is, the supply refrigerant RR' in the second supply line SL2' may receive the pressure from the supply refrigerant RR' stored in the supply tank 400'. Thus, the flow energy of the supply refrigerant RR' transferred from the supply tank 400' to the slurry mixer SM' through the second supply line SL2' may increase.

In an embodiment, a second supply height valueH3 of a point where the second supply line SL2' is connected to the supply tank 400' may have a value less than the height value L3 of a supply lower limit RLL. That is, the second supply line SL2' may be located under the supply lower limit RLL' that is a criterion for operating the supply pump 500'.

That is, the supply pump 500' may stop discharging the supply refrigerant RR' by stopping the operation before the supply refrigerant RR' reaches the second supply line SL2'. In other words, the point where the second supply line SL2' is connected to the supply tank 400' may be lower than the water level value of the supply refrigerant RR'. Because the supply refrigerant RR' fills in the second supply line SL2', idling of the supply pump 500' installed on the second supply line SL2' may be prevented.

In an embodiment, the first supply line SL1' may be connected to the supply tank 400' at a higher point than the second supply line SL2'. The first supply height value H4 of the point where the first supply line SL1' is connected to the supply tank 400' may have a greater value than a second supply height value H3 of a point where the second supply line SL2' is connected to the supply tank 400'.

Because the first supply height value H4 has a greater value than the second supply height value H3, a pressure applied to the refrigerant R' in the first supply line SL1' from the inside of the supply tank 400' may be less than that applied to the supply refrigerant RR' in the second supply line SL2' from the inside of the supply tank 400'.

That is, the pressure applied to the refrigerant R' entering the supply tank 400' from the inside of the supply tank 400' may be less than that applied to the supply refrigerant RR' discharged from the supply tank 400'. Thus, the refrigerant R' may sufficiently enter the supply tank 400' and the supply refrigerant RR' may be sufficiently transferred to the slurry mixer SM'.

Referring to FIG. 2, the supply pump 500' may be arranged on the second supply line SL2'. The supply pump 500' is arranged on the second supply line SL2' and may transfer the flow energy to the supply refrigerant RR' in the second supply line SL2'. The supply pump 500' may form the flow of the supply refrigerant RR' in the second supply line SL2'.

Referring to FIG. 2, the supply pump 500' may return the supplied refrigerant RR' stored in the supply tank 400' into the slurry mixer SM'. The supply pump 500' may form a flow so that the supply refrigerant RR' in the second supply line SL2' may be transferred to the slurry mixer SM' from the supply tank 400'.

The supply pump 500' may form a hydraulic pressure of the supply refrigerant RR' transferred to the slurry mixer SM'. The supply pump 500' may increase the flow rate of the supply refrigerant RR' supplied to the slurry mixer SM' by forming high hydraulic pressure of the supply refrigerant RR' transferred to the slurry mixer SM'. Thus, the efficiency of cooling the slurry may be improved when agitating the slurry.

The supply pump 500' may operate according to the water level value of the supply refrigerant RR'. The supply pump 500' may start to operate when the water level value of the supply refrigerant RR' stored in the supply tank 400' is large, and may stop operating when the water level value of the supply refrigerant RR' is small (e.g., small relative to large).

In an embodiment, the supply pump 500' may start to operate when the water level value of the supply refrigerant RR' is greater than or equal to the supply upper limit RUL. The supply pump 500' may reduce the amount of the supply refrigerant RR' stored in the supply tank 400' by transferring the supply refrigerant RR' stored in the supply tank 400' to the slurry mixer SM'.

In another embodiment, the supply pump 500' may stop operating when the water level value of the supply refrigerant RR' is less than or equal to the supply lower limit RLL. The supply pump 500' may increase the amount of the supply refrigerant RR' accommodated in the supply tank 400' by allowing the supply refrigerant RR' stored in the supply tank 400' to be accommodated in the supply tank 400'.

Thus, the supply pump 500' may maintain the amount of the supply refrigerant RR' stored in the supply tank 400' within a certain range.

Referring to FIG. 2, the valve portion V' may be arranged between the refrigerant storage 100' and the supply tank 400'. The valve portion V' may be arranged on the first supply line SL1' that fluidically connects the refrigerant storage 100' to the supply tank 400'. The valve portion V' may be arranged on the first supply line SL1' so as to open/close the first supply line SL1'.

The valve portion V' may adjust the flow of the refrigerant R' transferred from the refrigerant storage 100' to the supply tank 400'. For example, the valve portion V' may adjust the flow of the refrigerant R' flowing in the first supply line SL1' according to the operation of the slurry mixer SM'.

When the slurry mixer SM' is operated, the valve portion V' opens the first supply line SL1' so that the refrigerant R' may be transferred into the slurry mixer SM'. When the slurry mixer SM' does not operate, the valve portion V' may close the first supply line SL1' in order to stop supplying the refrigerant R' to the supply tank 400'. Thus, the efficiency of supplying the refrigerant R' may be improved.

The valve portion V' may be driven according to the water level value (e.g., refrigerant level value) in the supply tank 400'. For example, the valve portion V' may close the first supply line SL1' when the water level of the supply refrigerant RR' exceeds the supply upper limit RUL. Alternatively, the valve portion V' may open the first supply line SL1' when the water level of the supply refrigerant RR' is less than the supply lower limit. Thus, the valve portion V' may be driven to maintain the water level value of the supply refrigerant RR' within a certain range.

Referring to FIG. 2 a supply water level sensor S2' may measure the water level value of the supply refrigerant RR' stored in the supply tank 400'. The supply water level sensor S2' may measure the water level value of the supply refrigerant RR' and transfer the value to the controller 600'. Thus, the supply water level sensor S2' may transfer to the controller 600' information that is a determination criterion for controlling the driving of the return pump 300'.

A refrigerant supply apparatus 10" according to another embodiment of the present disclosure as shown in Fig. 3 differs from the refrigerant supply apparatus 10' according to the above embodiment of Fig. 2 in view of further including some additional components, and these differences are described below.

Referring to FIG. 3, a slurry mixer SM" in the refrigerant supply apparatus 10" according to another embodiment of the present disclosure may receive the supply of the refrigerant R" through a supply line SL" and a bypass line BPL".

The bypass line BPL" may be branched from a first supply line SL1". An end of the bypass line BPL" is connected to the first supply line SL1" (e.g., connected via valve portion V") and the other end of the bypass line BPL" is connected to the slurry mixer SM", and thus, the bypass line BPL" may fluidically connect the first supply line SL1" to the slurry mixer SM".

The bypass line BPL" may provide a passage through which the slurry mixer SM" may be directly supplied with the refrigerant R" from the refrigerant storage 100". The bypass line BPL" may provide a passage through which the slurry mixer SM" may be supplied with the refrigerant R" from the refrigerant storage 100" without passing through the supply tank 400". Thus, the slurry mixer SM" may directly receive the refrigerant R" through the bypass line BPL" when the amount of the supply refrigerant RR" stored in the supply tank 400" is insufficient. When the refrigerant R" is transferred to the slurry mixer SM" through the bypass line BPL", noise generation is reduced and safety of the operator may be secured.

A valve portion V" may control the flow of the refrigerant R" to the supply line SL" and the bypass line BPL". The valve portion V" may be arranged on the supply line SL" and the bypass line BPL" and open/close the supply line SL" and the bypass line BPL". The valve portion V" may adjust the flow rate of the refrigerant R" transferred to respective lines by entirely or partially opening/closing the supply line SL" and the bypass line BPL".

The valve portion V" may be a control valve arranged between the first supply line SL1" and the bypass line BPL" or a flow rate control valve installed on each of the first supply line SL1" and the bypass line BPL". However, the valve portion V" may be generally selected by a person of ordinary skill in the art in order to adjust the flow rate of the fluids transferred to respective branched lines belongs to the scope of the present disclosure.

The valve portion V" may be driven according to the operation of the slurry mixer SM". For example, the valve portion V" may open the first supply line SL1" or the bypass line BPL" when the slurry mixer SM" operates. In other embodiments, the valve portion V" may close the first supply line SL1" and the bypass line BPL" when the slurry mixer SM" does not operate. Thus, the efficiency of supplying the refrigerant R" may be improved.

The valve portion V" may be driven according to the water level value in the supply tank 400".

The valve portion V" may close the first supply line SL1" when the water level of the supply refrigerant RR" exceeds the supply upper limit RUL. Alternatively, the valve portion V" may open the first supply line SL1" when the water level of the supply refrigerant RR" is less than the supply lower limit RLL. Thus, the valve portion V" may be driven to maintain the water level value of the supply refrigerant RR" within a certain range.

The valve portion V" may open the bypass line BPL" when the water level of the supply refrigerant RR" is less than the supply lower limit RLL. When the supply refrigerant RR" in the supply tank 400" is insufficient, the valve portion V" may transfer to the slurry mixer SM" the refrigerant R" that is transferred from the refrigerant storage 100" without using the supply refrigerant RR" in the supply tank 400". Thus, stability of the supply tank 400" and the supply pump 500" may be improved, and at the same time, the efficiency of the slurry agitation operation may be improved.

Referring to FIG. 4, the refrigerant supply apparatus 10 may further include the controller 600.

The controller 600 may control the driving of the slurry mixer SM or may receive information about the driving of the slurry mixer SM. The controller 600 may be electrically connected to the slurry mixer SM. The controller 600 may operate the slurry mixer SM by receiving a signal from an operator. In other embodiments, the controller 600 may receive information about the temperature of the slurry in the slurry mixer SM.

The controller 600 may receive the information about the water level value of the recovery refrigerant SR from the recovery water level sensor S1. The controller 600 may be electrically connected to the recovery water level sensor S1. The controller 600 may receive the information about the water level value of the recovery refrigerant SR measured by the recovery water level sensor S1 and may use the information in order to control the driving of the return pump 300 after receiving the information.

The controller 600 may receive the water level value information of the supply refrigerant RR from the supply water level sensorS2'. The controller 600 may be electrically connected to the supply water level sensor S2'. The controller 600 may receive the water level value information of the supply refrigerant RR' measured by the supply water level sensor S2 and may use the information to control the driving of the return pump 300.

The controller 600 may be electrically connected to the valve portion V and control the driving of the valve portion V. The controller 600 may control the driving of the valve portion V according to the operating information of the slurry mixer SM or the water level value information of the supply refrigerant RR'.

The controller 600 may control the driving of the valve portion V by using the operation information of the slurry mixer SM. For example, the controller 600 may control the driving of the valve portion V so as to open the first supply line SL1 and the bypass line BPL when the slurry mixer SM is operating. In other embodiments, the controller 600 may control the driving of the valve portion V so as to close the first supply line SL1" and the bypass line BPL when the slurry mixer SM is not operating.

The controller 600 may control the driving of the valve portion V by using the water level value information of the supply refrigerant RR". For example, when the water level of the supply refrigerant RR" exceeds the supply upper limit RUL, the controller 600 may control the driving of the valve portion V so as to close the first supply line SL1 and open the bypass line BPL. In other embodiments, when the water level value of the supply refrigerant RR" is less than the supply lower limit RLL, the controller 600 may control the driving of the valve portion V so as to open the first supply line SL1.

The controller 600 may be electrically connected to the return pump 300 so as to control the driving of the return pump 300. For example, the controller 600 may control the driving of the return pump 300 according to the water level value information of the recovery refrigerant SR.

The controller 600 may operate the return pump 300 when the water level of the recovery refrigerant SR exceeds the recovery upper limit SUL. In other embodiments, the controller 600 may stop operating the return pump 300 when the water level of the recovery refrigerant SR is less than the recovery lower limit SLL. Thus, the controller 600 may maintain the water level value of the recovery refrigerant SR stored in the recovery tank 200 within a certain range.

The controller 600 may be electrically connected to the supply pump 500 so as to control the driving of the supply pump 500'. For example, the controller 600 may control the driving of the supply pump 500' according to the operating information of the slurry mixer SM or the water level value information of the supply refrigerant RR.

The controller 600 may control the driving of the supply pump 500' according to the operating information of the slurry mixer SM. For example, the controller 600 may control the driving of the supply pump 500' according to a temperature value of the slurry in the slurry mixer SM. When the temperature value of the slurry in the slurry mixer SM is greater than or equal to a preset value, the controller 600 may increase the speed of cooling the slurry by increasing an output from the supply pump 500'. Thus, the controller 600 may improve the efficiency of agitating the slurry.

For example, when the water level of the supply refrigerant RR' exceeds the supply upper limit RUL, the controller 600 may operate the supply pump 500'. Alternatively, when the water level of the supply refrigerant RR' is less than the supply lower limit RLL, the controller 600 may stop operating the supply pump 500'. Thus, the controller 600 may maintain the water level value of the supply refrigerant RR stored in the supply tank 400' within a certain range.

The methods, processes, and/or operations described herein with respect to the controller may be performed by code or instructions to be executed by a computer, processor, controller, or other signal processing device. The computer, processor, controller, or other signal processing device may be those described herein or one in addition to the elements described herein. The algorithms, code or instructions for implementing the operations of the method embodiments herein may transform the computer, processor, controller, or other signal processing device into a special-purpose processor for performing the methods herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, or controller which is to execute the code or instructions for performing the method embodiments described herein.

An electrode slurry coated on an electrode of a secondary battery may include various components such as an active material, a binder, a conductive agent, a solvent, etc. Because uniformity of slurry is directly related to an efficiency of a battery, it is important to manage the quality during a slurry agitating process.

The refrigerant supply apparatus according to the embodiments of the present disclosure increase the amount of slurry provided to the slurry mixer so as to improve the efficiency of cooling the slurry when agitating the slurry. In detail, the refrigerant supply apparatus according to the embodiments of the present disclosure may increase the amount of refrigerant supplied to the slurry mixer by increasing a pressure difference between the refrigerant entering the slurry mixer and the slurry discharged from the slurry mixer. Also, the refrigerant supply apparatus according to the embodiments of the present disclosure may improve the structural stability of the refrigerant supply apparatus by maintaining the amount of the refrigerant stored in the recovery tank and the supply tank within a certain range.

The refrigerant supply apparatus according to the embodiments of the present disclosure may increase the amount of refrigerant supplied to the slurry mixer by increasing a pressure difference between the refrigerant entering the slurry mixer and the slurry discharged from the slurry mixer.

Also, the refrigerant supply apparatus according to the embodiments of the present disclosure may improve the structural stability of the refrigerant supply apparatus by maintaining the amount of the refrigerant stored in the recovery tank and the supply tank within a certain range.

Effects obtainable from the present disclosure may be non-limited by the above-mentioned effect. Other unmentioned effects may be clearly understood from the following description by one of ordinary skill in the art to which the present disclosure pertains.

The present disclosure has been described in detail. However, it should be understood that the detailed description and specific examples, while indicating preferred embodiments of the disclosure, are given by way of illustration only, since various changes and modifications within the scope of the disclosure will become apparent to one of ordinary skill in the art from this detailed description.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A refrigerant supply apparatus, comprising:
a refrigerant storage configured to supply a refrigerant to a slurry mixer through a supply line; and
a recovery tank configured to recover the refrigerant from the slurry mixer through a recovery line, the recovery tank being configured to recover the refrigerant stored therein to the refrigerant storage through a return line.

2. The refrigerant supply apparatus as claimed in claim 1, wherein the recovery tank has an opening through which an inner space and an outer space thereof are in fluidic communication with each other.

3. The refrigerant supply apparatus as claimed in claim 2, wherein the opening is closer to an upper surface of the recovery tank than to a lower surface of the recovery tank.

4. The refrigerant supply apparatus as claimed in any one of the preceding claims, wherein a recovery height value of a point where the recovery line is connected to the recovery tank is greater than a return height of a point where the return line is connected to the recovery tank.

5. The refrigerant supply apparatus as claimed in any one of the preceding claims, wherein a point where the recovery line is connected to the recovery tank is closer to an upper surface of the recovery tank than to a lower surface of the recovery tank.

6. The refrigerant supply apparatus as claimed in any one of the preceding claims, further comprising a return pump on the return line, the return pump being configured to return a recovery refrigerant stored in the recovery tank to the refrigerant storage.

7. The refrigerant supply apparatus as claimed in claim 6, further comprising a controller electrically connected to the return pump, the controller configured to control driving of the return pump according to a water level value of the recovery refrigerant.

8. The refrigerant supply apparatus as claimed in any one of the preceding claims, further comprising a supply tank on the supply line, the supply tank being configured to store the refrigerant supplied from the refrigerant storage.

9. The refrigerant supply apparatus as claimed in claim 8, further comprising a supply pump between the slurry mixer and the supply tank, the supply pump being configured to supply refrigerant stored in the supply tank to the slurry mixer.

10. The refrigerant supply apparatus as claimed in claim 8 or claim 9, further comprising a valve portion between the refrigerant storage and the supply tank, the valve portion being configured to control a flow of the refrigerant supplied from the refrigerant storage to the supply tank.

11. The refrigerant supply apparatus as claimed in claim 10, further comprising a controller electrically connected to the valve portion, the controller being configured to control driving of the valve portion according to a water level value of the refrigerant stored in the supply tank.

12. A refrigerant supply apparatus, comprising:
a refrigerant storage configured to supply a refrigerant to a slurry mixer through a supply line and a bypass line;
a supply tank on the supply line, the supply tank being configured to store the refrigerant supplied from the refrigerant storage;
a valve portion configured to control a flow of the refrigerant to the supply line and the bypass line; and
a recovery tank configured to recover the refrigerant from the slurry mixer through a recovery line, the recovery tank being configured to return refrigerant stored therein to the refrigerant storage through a return line.

13. The refrigerant supply apparatus as claimed in claim 12, further comprising a controller electrically connected to the valve portion, the controller being configured to control driving of the valve portion according to a water level value of a supply refrigerant stored in the supply tank.

14. The refrigerant supply apparatus as claimed in claim 12 or claim 13, wherein the recovery tank has an opening through which an inner space and an outer space are in communication with each other.

15. The refrigerant supply apparatus as claimed in claim 14, wherein the opening is closer to an upper surface of the recovery tank than to a lower surface of the recovery tank.
